# EUROPEAN PATENT SPECIFICATION

(11) **EP 0 787 078 B1**
(45) Date of publication and mention of the grant of the patent: **10.05.2000**
(21) Application number: 95936186.6
(22) Date of filing: 25.10.1995
(51) Int. Cl.: B60P 3/00, E04B 1/344

(54) **MOBILE, UNFOLDABLE ACCOMODATION OF ACTIVITIES**
ENTFALTBARE MOBILE UNTERKUNFTSEINHEIT
MAISON MOBILE DEPLIABLE

(30) Priority: 26.10.1994 SE 9403670
(43) Date of publication of application: 06.08.1997
(73) Proprietor: Samina Limited, Dublin 2 (IE)
(72) Inventor: GYLLENHAMMAR, Thorbjörn, S-161 53 Bromma (SE)
(74) Representative: Onn, Thorsten
(86) International application number: SE9501268
(87) International publication number: WO9613402

(56) References cited:
- EP-A- 0 334 822
- CH-A- 544 674
- GB-A- 2 069 419
- GB-A- 2 145 379
- US-A- 3 271 065
- US-A- 4 135 755

## Description

The present invention relates to a mobile accomodation of the kind set forth in the preamble of the attached claim 1.

A great number of variants of accomodations of this type are priorly known, which all have disadvantages with respect to difficulties in connecting mutually movable parts and especially difficulties to maintain a remaining space in the interior of the accomodation when it is in non-expanded position. Such a space is important in order to permit conveying of parts, belonging to the accomodation, without having to spread the parts to other means of transport during transportation.

From closest prior art document EP,A2,334 822, for instance, a mobile home is known, which is of the type mentioned above in the introduction, and which has all the side walls, end walls and foldable roof and floor sections retracted into both sides of a central main body thereby to a very great extent consuming the disposable interior space of the main body when the mobile home is in its non-expanded position. This is valid particularly if the inwardly folded roof sections consists of more than two sections.

Other known mobile homes of this kind are disclosed by CH,544 674; GB,A,2 069 419; GB,A,2 145 379 and US,A,4 135 755. These mobile homes have the above mentioned disadvantage and, moreover, are constructed such that complicated working operations are necessary in order to carry out the expansion.

The object of the invention is to achieve a mobile accomodation or similar space, which in non-expanded position has the largest possible interior space maintained, and which can be expanded without complicated working operations.

This is achieved according to the invention in that the accomodation comprises the characterizing features set forth in claim 1. Further preferable developments of the invention are set forth in claims 2-4.

By the invention the advantage has been obtained that in the non-expanded position, e.g. during transportation, the roof sections are piled on top of the roof of the central structure instead of reducing the interior space of the central structure. The increased height caused by the roof sections is no problem during transportation, at least not within certain limits. Moreover, roof sections, floor sections, the respective side wall and the central structure are constantly connected together by hinges such that complicated working operations are avoided. Due to the fact that the roof sections always are folded upwards it is possible to obtain a mansard roof on the expanded units, which is preferable from a working point of view as well as structural strength point of view with respect to a.o. snow loads.

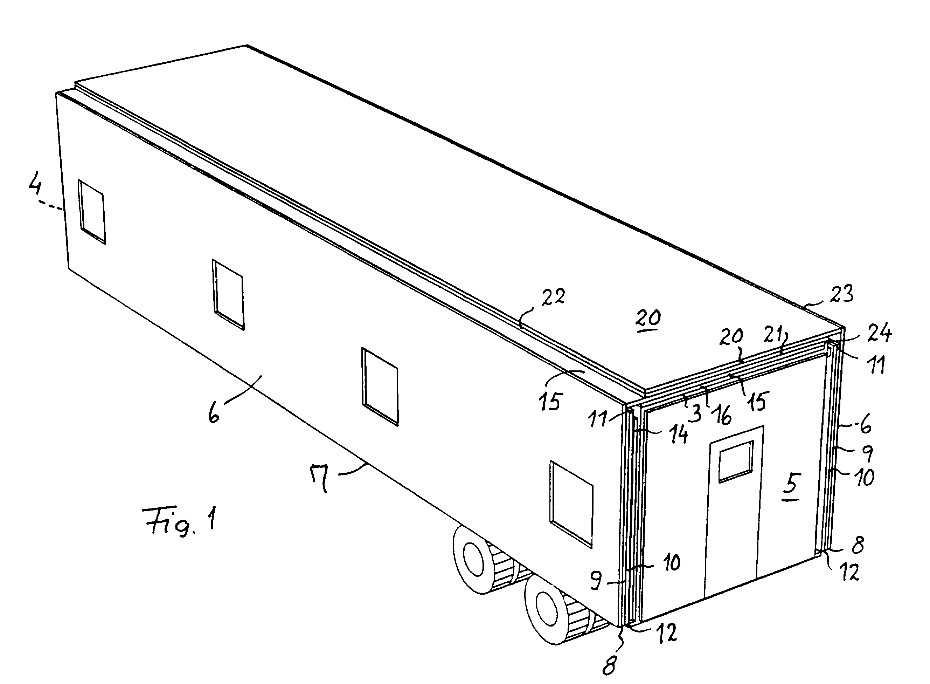

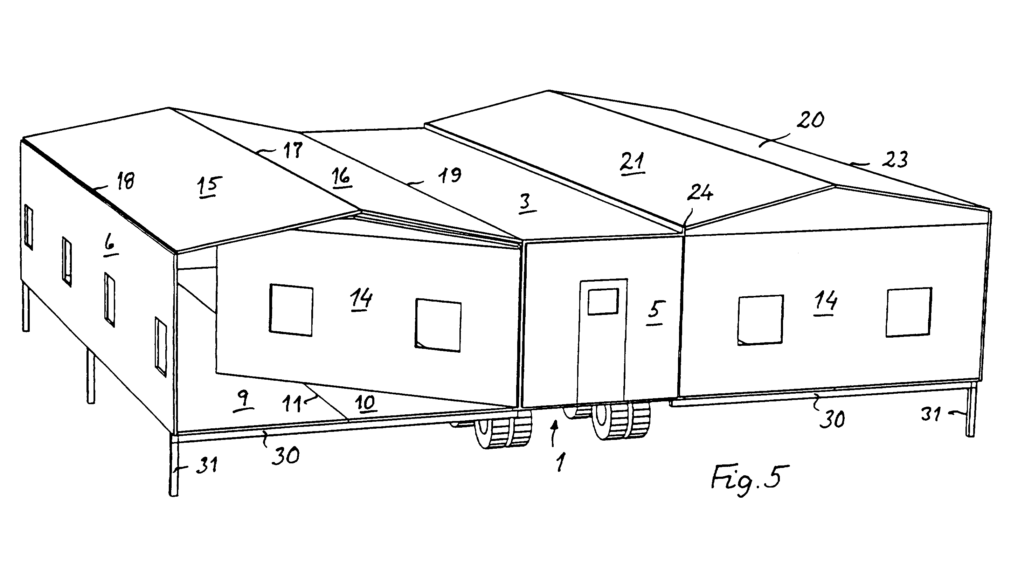

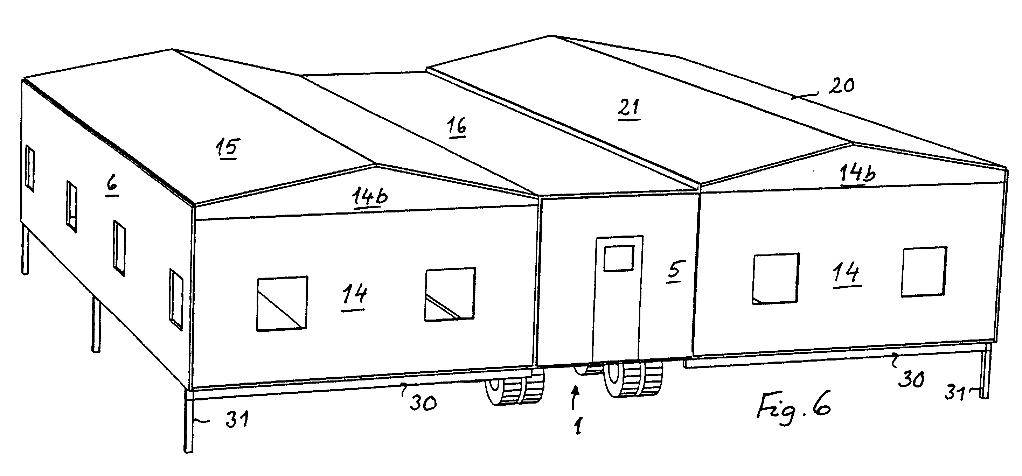

The invention is further described in the following description with reference to the accompanying drawings which schematically illustrate an embodiment of the accomodation of the invention, and in which Figs. 1-6 are isometric views showing different steps of the expansion of the accomodation from transportation position in Fig.1 to fully expanded position in Fig.6.

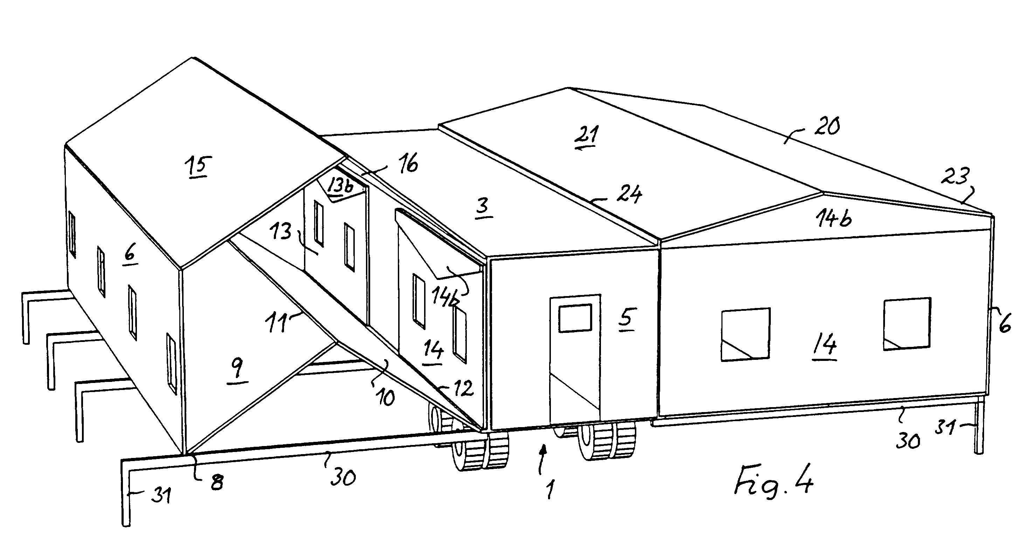

Fig.1 discloses the mobile accomodation in transportation position. A central structure 1 is provided with floor 2, roof 3 and a front end wall 4 and a rear end wall 5. Each side of the central structure supports a side wall 6, the bottom edge 7 of which being hinged by a hinge 8 to the outermost of two floor sections 9 and 10, respectively, which are hinged to each other by a hinge 11. The innermost floor section 10 is by a hinge 12 hinged to the bottom edge of the central structure 1. To the vertical edges of the front and rear end wall 4 and 5, respectively, a front wall 13 and a rear wall 14 are hinged (vide Fig.4).

On top of the roof 3 of the central structure two folded roof sections 15 and 16, respectively, are positioned connected by a hinge 17. One of them 15 is hinged to the side wall 6 by a hinge 18 extending along the top edge of the side wall 6. The other roof section 16 is hinged to the central structure by a hinge 19 extending along the roof edge of the central structure 1.

Two further folded roof sections 20,21 connected by a hinge 22 are positioned on top of the roof sections 15,16. The uppermost roof section 20 is hinged to the top edge of the other side wall 6 by a hinge 23. The underlying roof section 21 is hinged to the roof edge of the central structure 1 by a hinge 24. The hinges 23 and 24 are positioned higher than the hinges 18 and 19 in order to enable placing the roof sections 20,21 on top of the roof sections 15,16.

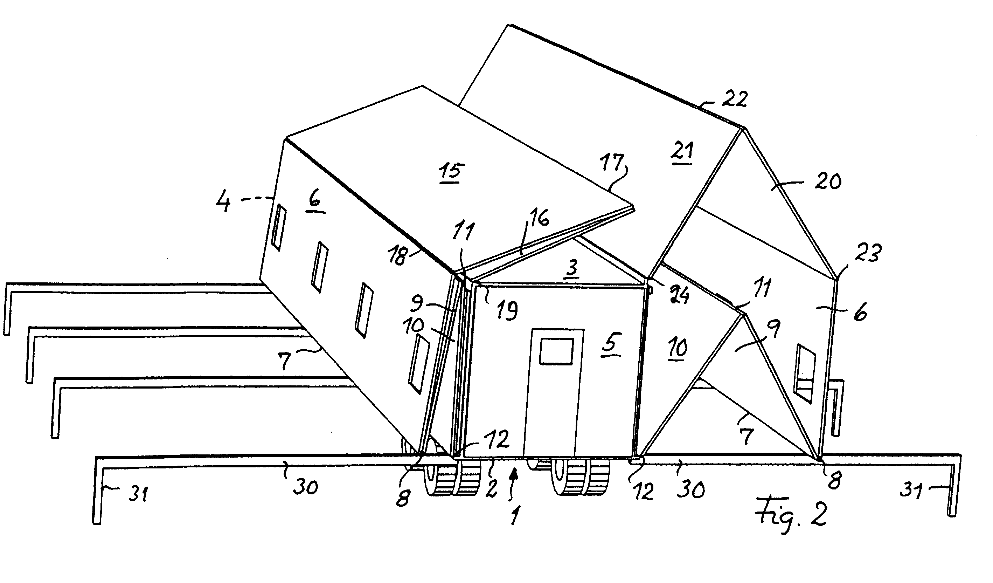

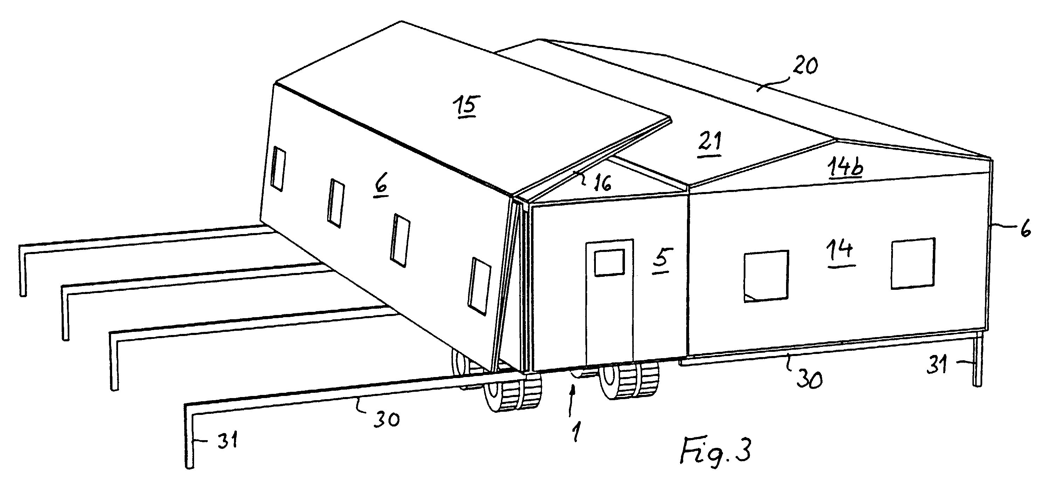

The expansion of the accomodation is started by the attachment of four beams 30 to each side of the central structure 1 and adjustment in horizontal position by adjustable supports 31 as shown in Fig.2. The beams are preferably telescopically extensible from the chassis of the central structure (not shown). After that, the right hand side wall 6 in the drawing is moved out on the beams 30, which on the top side are provided with tracks for guiding the wall 6 in vertical position. At the same time the roof sections 20,21 are initially lifted a bit after which they are automatically pivoted upwards when the side wall 6 is moved out to the ends of the beams 30. Then the front end wall 14 and the rear end wall 13 (not shown in the drawing) are swung to the position shown in Fig.3. Triangular wall portions 13b and 14b are hinged to the walls 13 and 14, respectively, and are swung up to and locked to the under sides of the roof sections 20,21.

Then the same operation is performed with respect to the other unit, as shown in detail by Figs. 4 and 5, after which the expanded accomodation has the shape shown in Fig. 6.

The invention is not restricted to the embodiment shown and described above but may be modified in different ways within the scope of the inventive idea defined in the claims. Hence, for instance the floor and roof may each consist of more than two foldable floor and roof sections. In that case the piling will be performed to a greater height, which is much more preferable than permitting said sections to reduce the interior space, which is the case with the known constructions, because usually the exerior width of the accomodation is limited.

## Claims

1. A mobile accomodation or similar space comprising a central structure (1), which is provided with floor (2), roof (3) and front and rear end walls (4,5), and which is expandable in at least one direction in which at least two parallel supporting beams (30) provided with ground supports (31) are adaptable protruding from the central structure (1) and supporting a side wall (6), the bottom edge (7) of which being hinged to the outermost (9) of at least two foldable floor sections (9,10) the innermost of which (10) being hinged to the bottom edge of the central structure, and the top edge of which side wall being hinged to the outermost (15) of at least two foldable roof sections (15,16), the innermost of which (16) being hinged to a top edge of the central structure, in addition to which a front wall and a rear wall (13,14) is hinged to the central structure adapted to be swung out and locked in this position along the edge portions of the floor sections and the roof sections, **characterized** in that the hinge (18) of the outermost roof section (15) at the top edge of the side wall (6) is positioned higher than the hinge (19) of the innermost roof section (16) at the top edge of the central structure, and that the folded roof sections (15,16) at non-expanded position are folded in over the roof (3) of the central structure.

2. An accomodation according to claim 1, **characterized** in that it is expandable also in the opposite direction with respect to the first-mentioned expansion unit by a corresponding expansion unit having roof sections (20,21) that at the non-expanded position of the accomodation are hinged to the corresponding side wall (6) and central structure (1) at levels positioned higher than the corresponding hinges of the first-mentioned unit and are folded in over the roof sections (15,16) of the first-mentioned unit.

3. An accomodation according to claim 1 or 2, **characterized** in that after horizontal positioning of the beams (30) perpendicular to the sides of the central structure (1), preferably by telescopic extension, the corresponding side wall (6) is arranged to be moved sliding on the beams (30) fixed in vertical position by the beams.

4. An accomodation according to claim 1 or 2, **characterized** in that the beams (30) are telescopically movable out from the central structure (1) and the outer ends of the beams are fixedly attached to the bottom edge (7) of the corresponding side wall (6).

## Patentansprüche

1. Mobile Unterkunft oder ähnlicher Raum, umfassend eine zentrale Struktur (1), die mit einem Boden (2), einem Dach (3) und vorderen und hinteren Endwänden (4,5) versehen ist, und die in wenigstens eine Richtung expandierbar ist, in die wenigstens zwei parallele Tragbalken (30), die mit Bodenträgern (31) versehen sind, von der zentralen Struktur (1) anpassbar vorstehen und eine Seitenwand (6) halten, deren unterer Rand (7) mit dem äußersten (9) von wenigstens zwei faltbaren Bodenabschnitten (9,10) gelenkig verbunden ist, wobei der innerste (10) der beiden Abschnitte mit dem unteren Rand der zentralen Struktur gelenkig verbunden ist, und wobei der obere Rand dieser Seitenwand mit dem äußersten (15) von wenigstens zwei faltbaren Dachabschnitten (15,16) gelenkig verbunden ist, wobei der innerste Abschnitt (16) von diesen mit einem oberen Rand der zentralen Struktur gelenkig verbunden ist, wobei zusätzlich dazu eine vordere Wand und eine hintere Wand (13,14) mit der zentralen Struktur gelenkig verbunden sind, welche derart ausgebildet sind, daß sie ausschwenken und in dieser Stellung längs der Randteile der Bodenabschnitte und der Dachabschnitte festgestellt werden, **dadurch gekennzeichnet,** daß das Gelenk (18) des äußersten Dachabschnitts (15) am oberen Rand der Seitenwand (6) höher angeordnet ist als das Gelenk (19) des innersten Dachabschnitts (16) am oberen Rand der zentralen Struktur, und dadurch daß die gefalteten Dachabschnitte (15,16) in der nicht expandierten Stellung über das Dach (3) der zentralen Struktur gefaltet sind.

2. Unterkunft nach Anspruch 1, dadurch gekennzeichnet, daß sie auch in entgegengesetzte Richtung bezüglich der ersterwähnten Expansionseinheit expandierbar ist durch eine entsprechende Expansionseinheit, welche Dachabschnitte (20,21) aufweist, die in nicht expandierter Stellung der Unterkunft mit der entsprechenden Seitenwand (6) und der zentralen Struktur (1) gelenkig verbunden sind in Höhen, die höher angeordnet sind als die entsprechenden Gelenke der ersterwähnten Einheit, und über den Dachabschnitten (15,16) der ersterwähnten Einheit gefaltet sind.

3. Unterkunft nach Anspruch 1 oder 2, dadurch gekennzeichnet, daß nach einer horizontalen Anordnung der Balken (30) orthogonal zu den Seiten der zentralen Struktur (1), vorzugsweise durch teleskopartige Verlängerung, die entsprechende Seitenwand (6) derart angeordnet ist, daß sie auf den Balken (30) gleitend verschoben werden kann, wobei sie in vertikaler Stellung von den Balken fixiert ist.

4. Unterkunft nach einem der Ansprüche 1 oder 2, dadurch gekennzeichnet, daß die Balken (30) aus der zentralen Struktur (1) teleskopartig heraus bewegbar sind und die äußeren Enden der Balken fest an dem Bodenrand (7) der entsprechenden Seitenwand (6) angebracht sind.

## Revendications

1. Maison ou espace similaire mobile, comprenant une structure centrale (1), qui comporte un plancher (2), un toit (3) et des parois d'extrémités avant et arrière (4, 5), et qui peut être agrandie dans au moins une direction, dans laquelle sont adaptables au moins deux poutres de support parallèles (30) qui sont pourvues de supports (31) appuyant sur le sol et font saillie depuis la structure centrale (1) et supportent un mur latéral (6) dont le bord inférieur (7) est articulé à la plus externe (9) d'au moins deux sections pliables (9, 10) de plancher, dont la plus interne (16) est articulée à un bord supérieur de la structure centrale, un mur avant et un mur arrière (3, 4) étant en outre articulés à la structure centrale et aptes à se déployer par pivotement et à être verrouillés dans cette position le long des parties formant bords des sections de plancher et des sections de toit, **caractérisée** en ce que l'articulation (18) de la section (15) de toit la plus externe sur le bord supérieur du mur latéral (6) est placée plus haut que l'articulation (19) de la section (16) de toit sur le bord supérieur de la structure centrale, et en ce que les sections (15, 16) de toit rabattues en position non déployée sont rabattues par dessus le toit (3) de la structure centrale.

2. Maison selon la revendication 1, **caractérisée** en ce qu'elle peut également être agrandie, dans la direction opposée par rapport à la première unité d'agrandissement précitée, par une unité d'agrandissement correspondante ayant des sections (20, 21) de toit qui, dans la position non agrandie de la maison, sont articulées au mur latéral correspondant (6) et à la structure centrale (1) à des niveaux situés plus haut que les articulations correspondantes de la première unité précitée et sont rabattues par dessus les sections (15, 16) de toit de la première unité précitée.

3. Maison selon la revendication 1 ou 2, **caractérisée** en ce que, après la mise en place horizontale des poutres (30) perpendiculairement aux côtés de la structure centrale (1), de préférence par déploiement télescopique, le mur latéral correspondant (6) est à même de coulisser sur les poutres (30) en étant fixé en position verticale par les poutres.

4. Maison selon la revendication 1 ou 2, **caractérisée** en ce que les poutres (30) peut sortir de manière télescopique de la structure centrale (1) et les extrémités extérieures des poutres sont assujetties de manière fixe au bord inférieur (7) du mur latéral correspondant (6).
